# EUROPEAN PATENT APPLICATION

(11) **EP 1 683 576 A1**
(43) Date of publication of application: **26.07.2006**
(21) Application number: 06001070.9
(22) Date of filing: 19.01.2006
(51) Int. Cl.: B01J 47/00, A47J 31/60

(54) **Limescale prevention device**

(30) Priority: 20.01.2005 IT BO20050034
(71) Applicant: Ture, Luigi, 44020 Viallanova FE (IT)
(72) Inventor: Ture, Luigi, 44020 Viallanova FE (IT)
(74) Representative: Negrini, Elena

(57) **Abstract**

A limescale preventing device comprises ions exchange material.

Said material comprises a resin composition (2) contained in a permeable housing (3).

## Description

The present invention relates to the filed concerning the water treatment and refers to a limescale prevention device for household appliances, such as steam boilers, beverage distribution machines or machine using water and, particularly, for the coffee machines.

There are known limescale prevention devices, in which water flow is passed through to allow the active products, contained therein, to contact such water to be treated.

Said know device can be configured as filter to be installed along a pipeline or, as a second type, can be formed as funnel used for pouring the water into a container.

Such known devices have the drawback that they are massive and bulky, therefore, they are not suitable to be used in small household appliances.

A further drawback of the first kind of filter device consists in that it requires a complex installation in the household appliance or in the water adduction pipeline and it requires periodic substitutions of the active products and maintenance.

Another drawback of the second kind of devices is that they allow a small water flow and thus the user needs a lot of time and must be very careful when pouring the water.

Besides, these latter devices are also uncomfortable due to the fact that generally after the use they must be stored while they are still containing some water.

Other drawback of the said types of devices consists in that they can be colonized by batteries and/or can favorite the bacterial proliferation in the water to be treated.

An object of the present invention is to propose a small size device extremely easy to be used in a household appliance such as a coffee machine.

Other object is to propose a device without any maintenance and very easy to be replaced without using any tool.

Further object is to propose a device that it does not reduce the capacity of the tank of appliances, not to be stored after the use and very fast to be applied and to be substituted without wasting time.

Other object is to propose a device able to prevent the bacterial proliferation therein and inside the tank in which it is inserted.

The characteristics of the invention are highlighted in the following with particular reference to the attached drawings, in which:
- the figure 1 shows a schematic front view of the limescale prevention device of the invention after few minutes from immersion in the water of a container;
- the figure 2 shows a schematic front view of the limescale prevention device of the invention after few hours of immersion in the water of the container.

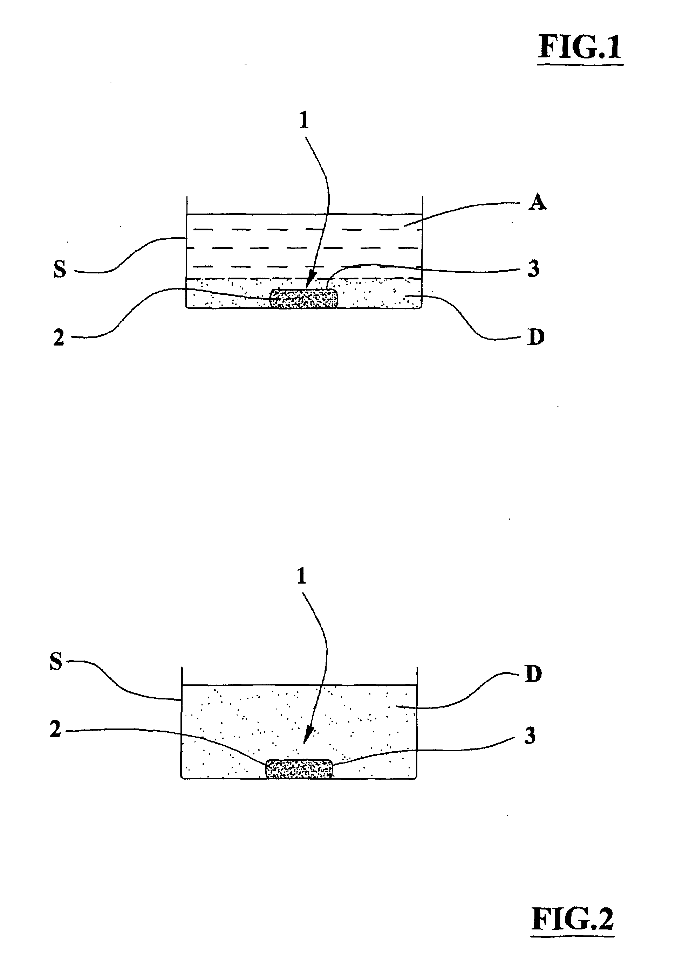

With reference to the figures 1 and 2, the numeral I indicates the device, object of the present invention, comprising ions exchange material to get out the calcium carbonate and other substances of the limescale.

Said material comprises a composition of resins 2 constituted by at least two kinds of resins in granule, spheroid, fragment or similar, having respective various specific weights, contained in a permeable housing 3.

The invention provides that the limescale prevention material can also comprise more than two different kinds of resins in the condition that at least two of them have relevant difference of values in the respective specific weights or in the respective densities.

The housing is made of fabric, disposable fabric, paper or similar permeable and water-resistant products and it has a filtration degree in the range between 1 to 1.000 micron and anyway smaller than the dimensions of the smallest resins elements.

The housing is formed as waffle and is obtained by sewing, welding, gluing, or similar, the fabric, eventually shaped, or the other material of which is constituted.

Preferably, the housing has a maximum dimension in the range from 1 cm to 20 cm in order to easily pass through the mouthpiece of the tanks to which it is destined.

The housing also contains a bacteriostatic product, for instance having a resinous matrix comprising metallic silver, fit to prevent the bacterial proliferation in the device and in the tank in which it is positioned.

The first ionic exchange resin of the limescale preventing material has specific weight equal to about 1,18 g/ml, the second resin has specific weight equal to about 1,30 g/ml.

At the same time or in alternative, the invention provides that the resins composition 2 comprises at least a anionic exchange resin (or negative ions releasing resin), for instance a carboxyl resin, and at least a cationic exchange resin (or positive ions releasing resin).

The anionic exchange resin releases H⁻ and the cationic exchange resin releases Na⁺.

In an illustrative embodiment of the device, the first and second resins are the Dowex MAC-3® and the Dowex MONOSPHERE 350® of the Dow Chemical® or similar and the resin with silver is the C150 Ag® of the Purolite® or similar.

The operation of the limescale prevention device provides that it is immersed in the water to be treated A of a tank S, reaching the bottom of said tank, or the operation provides that the device is set in the tank and subsequently the water to be treated A is poured or filled up in the tank.

As showed in figure 1, after few minutes the device has decalcified the water D close to the bottom that, generally, it is the first one to be taken.

The presence of resins having different densities, unexpectedly favorite also the decalcification of the upper layers of the water in a short time, as illustrated in figure 2.

The mixture of the anionic exchange resin H and of the cationic exchange resin Na⁺ provides the unexpected effect to reduce the water decalcification time.

In particular, a device carried out according to the present invention has a housing containing some cubic centimeters of two or more kinds of resins, it is able to reduce in a few minutes about the 30% hardness of about three liters of water, in one hour to reduce the hardness of a further 30% and to in about two hours to complete the decalcification of about three liters of stationary water.

Taking or filling up the water provokes remixing of the water that it reduces the decalcification time.

When the resins of the device are exhausted, after a number of operational cycles that it depends from the hardness and the quantity of water of each cycle, the device is replaced with a new one.

An advantage of the present invention is to provide a limescale prevention device having small dimensions, very easy to be used in an apparatus or household appliance such as a coffee machine.

Other advantage is to provide a device maintenance free and very easy to be replaced without using any tool.

Further advantage is to provide a device that it does not reduce the capacity of the tanks of the apparatus, that it does not need to be stored after the use and that it can be very quickly applied and substituted, without wasting time.

Other advantage is to provide a device having a bactericide or bacteriostatic effect preventing or reducing the bacterial proliferation therein and inside the tank in which it is inserted.

## Claims

1. Limescale preventing device comprising ions exchange material **characterized in that** said material comprises a resin composition (2) contained in a permeable housing (3).

2. Device according to claim 1 **characterized in that** the resin composition (2) comprises at least two resins having different respective specific weights.

3. Device according to claim 1 **characterized in that** the resin composition (2) comprises at least a anionic exchange resin and at least a cationic exchange resin.

4. Device according to claim 1 **characterized in that** the resins are in granules, spheroids, fragments or similar.

5. Device according to claim 4 **characterized in that** the housing has a filtering degree ranging between 1 and 1.000 microns.

6. Device according to claim 1 **characterized in that** the housing is made of fabric, disposal fabric, paper or similar.

7. Device according to claim 1 **characterized in that** the housing is sewn, welded, glued or similar.

8. Device according to claim 1 **characterized in that** the housing is in form of waffle.

9. Device according to claim 1 **characterized in that** the housing has preferably a dimension ranging from 1cm to 20cm.

10. Device according to claim 1 **characterized in that** the housing contains a bacteriostatic product.

11. Device according to claim 10 **characterized in that** the bacteriostatic product comprises silver.

12. Device according to claim 10 or to the claim 11 **characterized in that** the bacteriostatic product has resinous matrix.

13. Device according to claims 2 and 12 **characterized in that** the first ionic exchange resin has specific weight equal to about 1,18 g/ml, the second resin has specific weight equal to about 1,30 g/ml and the bacteriostatic product comprises a resin containing silver.

14. Device according to claim 3 **characterized in that** at least a anionic exchange resin releases H⁻ and at least a cationic exchange resin releases Na⁺.

15. Device according to claim 12 or 14 **characterized in that** the first and the second resins are the Dowex Mac-3® and the Dowex MONOSPHERE 350® of the Dow Chemical® or similar and the resin with silver is the C150 Ag® of the Purolite® or similar.
